# EUROPÄISCHE PATENTANMELDUNG

(11) **EP 1 238 696 A1**
(43) Veröffentlichungstag der Anmeldung: **11.09.2002**
(21) Anmeldenummer: 02003012.8
(22) Anmeldetag: 12.02.2002
(51) Int. Cl.: B01D 53/32, H01M 8/06, C01B 3/50

(54) **Verfahren und Vorrichtung zur Entfernung von Kohlenmonoxid aus einem Gasstrom**

(30) Priorität: 10.03.2001 DE 10111560
(71) Anmelder: Ballard Power Systems AG, 73230 Kirchheim / Teck-Nabern (DE)
(72) Erfinder: Zur Megede, Detlef, Dr., 73230 Kirchheim/Teck (DE)
(74) Vertreter: Kaufmann, Ursula Josefine, Dr.rer.nat. Dipl.-Phys.

(57) **Zusammenfassung**

Die Erfindung betrifft ein Verfahren zur Entfernung von Kohlenmonoxid aus einem Gasstrom, wobei ein mit CO beaufschlagter Gasstrom durch eine Vorrichtung geleitet und CO durch Adsorption an der Arbeitselektrode (3) aus dem Gasstrom entfernt wird. Abhängig von einer elektrischen Spannung zwischen Arbeitselektrode (3) und Gegenelektrode (4) oder zwischen Arbeitselektrode und Bezugselektrode (5) wird ein Elektroden-Reinigungsbetrieb eingeschaltet, indem ein Stromfluß zwischen Arbeitselektrode und Gegenelektrode ausgelöst und an der Arbeitselektrode angelagertes CO zu CO₂ oxidiert wird

## Beschreibung

Die Erfindung betrifft Verfahren und Vorrichtung zur Entfernung von Kohlenmonoxid aus einem Gasstrom gemäß dem Oberbegriff der unabhängigen Patentansprüche.

In Brennstoffzellen reagieren Wasserstoff und Sauerstoff zu Wasser unter Abgabe von elektrischem Strom. Hierbei hängt der Wirkungsgrad der Brennstoffzelle unter anderem von der Reinheit der Reaktanden ab. Die Wasserstofferzeugung aus kohlenstoffhaltigen Stoffen wie Methanol, Benzin, Naphtha, Methan etc. beispielsweise für PEM-Brennstoffzellensysteme setzt eine wie auch immer geartete Reformierung in einem Gaserzeugungssystem voraus. Hierbei kann es sich um eine Dampfreformierung, eine partielle Oxidation oder eine autotherme Reformierung handeln. Bei diesen Verfahren, bei denen der Wasserstoff aus einem flüssigen oder gasförmigen Brennmittel durch Reformierung erzeugt wird, besteht der Brennmittelstrom nicht aus reinem Wasserstoff, sondern enthält noch weitere, teilweise unerwünschte Bestandteile. Besonders das hierbei entstehende Kohlenmonoxid (CO) stellt ein Problem dar, da es für viele Katalysatoren, nicht nur in Brennstoffzellen, schädlich ist und außerdem nicht in die Umwelt emittiert werden darf. Sein Anteil am Reformatstrom muss daher in den Bereich deutlich unter 100 ppm gesenkt werden.

Hierfür sind verschiedene Techniken bekannt. Bei Membranverfahren werden für Wasserstoff mehr oder weniger durchlässige Membranen eingesetzt, um Verunreinigungen zu entfernen. Eine hundertprozentige Selektivität für Wasserstoff haben dabei nur palladiumhaltige Membranen, die heute aber noch sehr teuer und schwierig zu verarbeiten sind. Andere Werkstoffe lassen neben Wasserstoff auch noch unerwünschte Verunreinigungen durch, so dass weitere Reinigungsschritte erforderlich sind. Allen Membranen ist gemeinsam, dass sie ein Druckgefälle als treibende Kraft für die Durchlässigkeit benötigen, was einen erhöhten Energieaufwand bedeutet.

Shiftreaktoren nutzen das Wassergas-Shiftgleichgewicht zur Reduzierung des CO-Gehalts unter Wasserzugabe. Hierbei stellt sich ein temperaturabhängiges Reaktionsgleichgewicht ein, bei dem aus CO und Wasser CO₂ und Wasserstoff und umgekehrt aus CO₂ und Wasserstoff wiederum CO und Wasser gebildet wird.

Durch selektive Oxidation des CO unter Luftzugabe kann der CO-Gehalt ebenfalls reduziert werden, wobei sich CO₂ bildet.

Beide Verfahren sind zur Grobreinigung gut geeignet, da sie mit relativ geringem Aufwand den Kohlenmonoxidanteil auf ca. 0,1 vol% absenken können. Danach muss zur weiteren Reduzierung auf die gewünschten Konzentrationen aus Gleichgewichtsgründen die Betriebstemperatur der Reaktion abgesenkt werden. Sowohl die Shiftreaktion als auch die selektive Oxidation sind aber bei den erforderlichen tiefen Temperaturen langsam, so dass sie erhöhte Mengen an Katalysator erforderlich machen, was entweder große Reaktoren (Shiftstufen) oder auch nur vermehrte Kosten durch höhere Edelmetallanteile (CO-Oxidation) zur Folge hat. Außerdem müssen die Katalysatoren zur vollen Funktion auf eine bestimmte Betriebstemperatur gebracht werden. Im Falle einer selektiven Oxidation ist auch eine zusätzliche Luftdosierung notwendig, die apparativen Aufwand zur Folge hat. Die eingebrachte Luft verdünnt den Wasserstoffstrom auch durch den in ihr enthaltenen Stickstoff, was unter Umständen unerwünscht ist.

Während eine Grobreinigung ohne zu großen Aufwand etwa mittels Membranen mit geringen Selektivitäten, selektiven Oxidationsstufen oder Shiftreaktoren möglich ist, stellt die Entfernung der nach der Grobreinigung im Reformatstrom verbleibenden CO-Restmenge von ca. 0,1 vol% höhere Anforderungen.

Aus der WO 00/16880 A1 ist ein Verfahren bekannt, bei dem CO aus einem wasserstoffreichen Brennmittel mittels eines katalytischen Materials, welches bevorzugt CO adsorbiert, entfernt wird. Das katalytische Material wird durch ein oxidierendes Medium regeneriert, welches mit dem adsorbierten CO reagiert. Die Reaktion wird durch einen elektrischen Stromfluss initiiert.

Dabei wird ausgenutzt, dass CO in der Lage ist, die Oberfläche von vielen Stoffen rasch und vollständig zu belegen, worauf unter anderem seine Giftigkeit und sein schädlicher Einfluß auf PEM-Brennstoffzellen beruhen. Die adsorbierte Menge CO wird anschließend elektrochemisch oxidiert. Das gebildete CO₂ bleibt nicht an der Oberfläche haften, so dass diese wieder frei ist für eine neue Belegung. Zur elektrochemischen Oxidation wird zwischen eine Arbeitselektrode und eine Gegenelektrode, welche durch eine ionenleitende Membran getrennt sind, Spannung angelegt, so dass ein elektrischer Strom über die Membran fließen kann. Dabei kommt es zu Problemen, wenn der Belegungsgrad durch CO zu hoch ist.

Aufgabe der Erfindung ist es daher, ein Verfahren und eine Vorrichtung zur Entfernung von Kohlenmonoxid aus einem Gasstrom anzugeben, bei denen diese Probleme vermieden werden.

Diese Aufgabe wird durch die Merkmale der unabhängigen Ansprüche 1 und 6 gelöst. Vorteilhafte Ausführungen sind Gegenstand weiterer Ansprüche.

Erfindungsgemäß wird eine elektrochemische Zelle vorgesehen, bei der eine Membran-Elektrodeneinheit so ausgebildet ist, dass eine vom Stromfluß unabhängige Bezugselektrode in einer Gegenelektrode vorgesehen wird, so daß die Oxidationsbedingungen zur CO-Entfernung vom Belegungszustand der Arbeitselektrode unabhängig erfaßt und/oder eingestellt werden können.

Weitere Vorteile gehen aus den Unteransprüchen und der Beschreibung hervor. Die Erfindung wird nun anhand der beigefügten Zeichnung näher beschrieben, wobei die Figuren zeigen:
- Fig. 1: eine Draufsicht auf zwei Kontaktplatten und eine Membran-Elektrodeneinheit,
- Fig. 2: eine schematische Ansicht einer Zelle mit Membran-Elektrodeneinheit und elektrischen Anschlüssen,
- Fig. 3: zwei Zellen in Serienschaltung und
- Fig. 4: drei Zellen in Parallelschaltung.

Die Vorrichtung ist besonders für die Feinreinigung eines Reformats in Brennstoffzellensystemen geeignet, bei dem das Reformat bereits grob vorgereinigt ist und der ursprüngliche CO-Gehalt in den Bereich unterhalb von 1 vol% reduziert wurde.

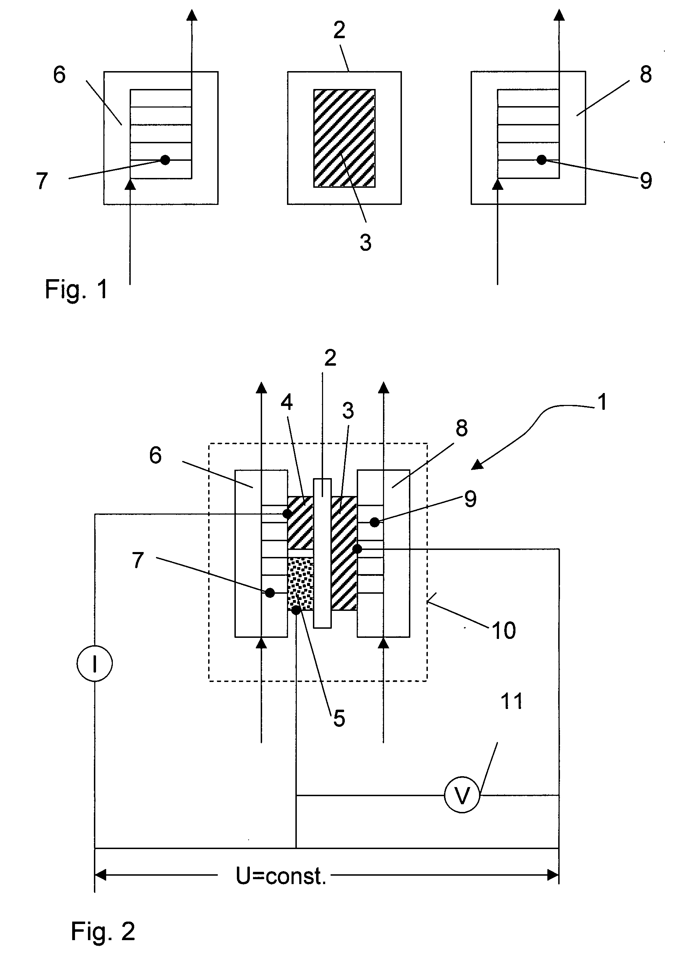

Ein Detail einer erfindungsgemäßen Vorrichtung ist in Fig. 1 dargestellt. Dargestellt sind eine erste Kontaktplatte 6 mit Kanälen 7 und eine zweite Kontaktplatte 8 mit Kanälen 9 sowie eine Membran-Elektrodeneinheit mit einer Membran 2 und einer Elektrode 3 einer Gasreinigungseinheit. Die Kontaktplatten 6, 8 und die Membran 2 sind in Draufsicht zu sehen, wobei die Elemente räumlich auseinander gezogen sind. Vorzugsweise ist die Membran 2 eine Polymerelektrolytmembran.

In Fig. 2 ist eine Seitenansicht einer schematischen Darstellung der Vorrichtung zu sehen. Die Membran-Elektrodeneinheit besteht aus der Membran 2 und zwei Elektroden, nämlich einer Arbeitselektrode 3 und einer davon durch die Membran 2 zweigeteilten Elektrode 4, 5 Dabei ist ein erster Teil der Elektrode 4, 5 stromdurchflossen und bildet die Gegenelektrode 4, ein zweiter Teil ist davon abgetrennt und nicht stromdurchflossen und bildet die Bezugselektrode 5. Die Bezugselektrode kann von der Gegenelektrode 4 umschlossen sein oder neben dieser angeordnet sein oder auch über oder unter dieser angeordnet und durch eine nicht dargestellte Isolierschicht von der Gegenelektrode 4 abgetrennt sein. Elektrisch sind Gegenelektrode 4 und Bezugselektrode 5 voneinander getrennt. Die Spannung zwischen Bezugselektrode 5 und Arbeitselektrode 3 wird zur Regelung des Stromflusses I zwischen Gegenelektrode 4 und Arbeitselektrode 3 entsprechend einer an sich bekannten Potentiostatenschaltung verwendet. Dabei wird die elektrische Spannung U zwischen Gegenelektrode 4 und Arbeitselektrode 3 auf die Spannung geregelt, die zwischen Bezugselektrode 5 und Arbeitselektrode 3 eingestellt ist. Die Messung der Spannung U zwischen Bezugselektrode 5 und Arbeitselektrode 3 erfolgt stromlos.

Der besondere Vorteil der von der Gegenelektrode 4 abgeteilten Bezugselektrode 5 liegt darin, dass die Parameter der CO-Oxidation bei einem konstanten Potential vorgenommen werden kann, indem ein konstantes Potential über die Bezugselektrode 5 vorgegeben wird und eine Änderung des elektrischen Potentials an der Gegenelektrode 4 bzw. der Arbeitselektrode 3 durch CO-Belegung sich nicht auf die CO-Oxidationsparameter auswirkt, sondern die CO-Oxidation unabhängig davon unter definierten Bedingungen erfolgen kann. Dies wird durch die stromlose Bezugselektrode 5 ermöglicht.

Die Arbeitselektrode 3 enthält ein kohlenmonoxidadsorbierendes Material, vorzugsweise Platin. Die katalytisch aktiven Zentren von Platinoberflächen werden beispielsweise bei Temperaturen unter 100°C nahezu vollständig von CO bedeckt. Dieser Effekt wird hier zur Entfernung von CO aus einem Reformatstrom benutzt, da die Affinität von CO an die Oberfläche so groß ist, dass es praktisch selektiv adsorbiert wird. Die erforderliche Menge von Platin kann wie folgt abgeschätzt werden.

Pro aktivem Platin-Atom wird 0,5-1 CO-Molekül adsorbiert. Unter der Annahme, dass 50% des vorhandenen Platins katalytisch aktiv ist, erhält man einen Bedarf von etwa 4 mol Platin pro zu entfernendem mol CO. Geht man von einem Reformatstrom von 100 Nm³/h und einem CO-Anteil im Reformat 0,1 vol% (1000 ppm) aus, ergibt sich eine erforderliche Platinmasse von 0,3 mol, also etwa 60 g, zur vollständigen Aufnahme der pro Minute anfallenden CO-Menge oder 1 g Platin pro sec. Bei höheren CO-Konzentrationen wird entsprechend mehr Platin notwendig.

Die adsorbierte CO-Menge wird elektrochemisch zu CO₂ oxidiert, welches nicht an der Platinoberfläche haftet, so dass diese dann frei wird und zur Wiederbelegung mit CO zur Verfügung steht. Die elektrochemische Oxidation erfolgt, indem zwischen der Gegenelektrode 4 und der Arbeitselektrode 3 eine elektrische Spannung angelegt wird und ein elektrischer Strom zwischen beiden Elektroden 3, 4 zu fließen beginnt. Ein ähnliches Prinzip wird in kommerziellen Sensoren zur Messung des CO-Gehalts in Gasen ausgenutzt. Für die Oxidation der CO-Menge aus der oben angeführten Berechnung ist nach dem Faradayschen Gesetz ein Strom von ca. 230 A erforderlich. Die hierfür notwendige Spannung liegt bei etwa 2 V. Die elektrische Leistung beträgt etwa 460 W, also rund 0,5 kW. Die Bezugselektrode 5 sorgt dafür, daß die CO-Oxidationsbedingungen definiert und unabhängig von der Arbeitselektrode 3 eingestellt werden können.

Unter der Annahme, dass 1 g Platin zur Aufnahme der in 1 Sekunde anfallenden CO-Menge ausreicht, erhält man bei einem erforderlichen Strom von 230 V je nach Stromdichte eine notwendige Elektrodenoberfläche von 230 cm² bei 1,0 A/cm² und 0,43 mg Pt/cm², oder eine Elektrodenoberfläche von 1150 cm² bei 0,5 A/cm² und 0,22 mg Pt/cm², oder eine Elektrodenoberfläche von 2300 cm² bei 0,1 A/cm² und 0,05 mg Pt/cm². Eine Elektrodenoberfläche von 230 cm² entspricht etwa einer Kantenlänge von 15 cm · 15 cm einer bevorzugten Arbeitselektrode 3.

Vorzugsweise bildet die Anordnung von Membran 2, Arbeitselektrode 3 und Elektrodenpaar 4, 5 eine Zelle 1 in der Art einer Brennstoffzelle. Die Zelle 1 weist ein Gehäuse 10 auf, welches die Kontaktplatten 6, 8 und die dazwischen angeordnete Membran-Elektrodeneinheit mit Membran 2 und Elektroden 3, 4, 5 umschließt. Die Kontaktplatten 8, 9 sind zur Gaszufuhr und/oder Stromzuführung bzw. Kontaktierung zu den Elektroden 3, 4, 5 vorgesehen. Die Strömungskanäle 7, 9 sind zweckmäßigerweise so ausgebildet, dass der Druckverlust der Medien in den Kanälen 7, 9 möglichst gering ist.

Das zu reinigende Reformat strömt in den Kanälen 9 der Kontaktplatte 8 und gelangt durch die Kanäle 9 an die Arbeitselektrode 3. Dort wird im Gasstrom mitgeführtes CO adsorbiert, und das gereinigte Reformat verläßt die Kontaktplatte 8 über die Kanäle 9. Dies ist durch Pfeile in der Figur angedeutet.

Besonders bevorzugt ist das Elektrodenpaar 4, 5 auf der der Arbeitselektrode 3 gegenüberliegenden Membranseite in Strom eines oxidierenden Mediums, vorzugsweise einen Luftstrom, integriert. Die Luft strömt dort durch Kanäle 7 der Kontaktplatte 6 und gelang über diese an das Elektrodenpaar 4, 5. Da die Bezugselektrode 5 nicht stromdurchflossen ist, bleibt die Gasreinigungseinheit auch dann funktionsfähig, wenn die Arbeitselektrode 3 vollständig mit CO belegt ist, da das Potential zur Oxidation über die Bezugselektrode 5 als konstanter Wert vorgegeben werden kann. Fällt die Gegenelektrode 4 mit der Bezugselektrode 5 wie im Stand der Technik räumlich zusammen, verändert sich die angelegte Spannung während der Oxidation. Dies führt dazu, dass gewährleistet sein muss, dass die Arbeitselektrode nicht vollständig mit CO belegt ist, sondern die Oxidation vorgenommen wird, bevor die aktive Fläche vollständig mit CO belegt wird. Weiterhin kann eine Potentialveränderung während der Oxidation auftreten, so dass die Oxidation zu weit getrieben wird und unerwünschterweise Produktwasser, welches sich im Membranbereich bildet, zersetzt wird. Durch die von der Gegenelektrode 4 getrennte, stromlose Bezugselektrode 5 bleibt die Funktionsfähigkeit unabhängig von der Arbeitselektrodenbelegung erhalten und eine Potentialverschiebung kann unterbunden werden, indem die Spannung an der Bezugselektrode konstant gehalten oder zumindest auf unkritische Werte begrenzt wird.

Vorzugsweise sind Mittel zur Spannungsmessung an der Bezugselektrode 5 vorgesehen, mit denen ein konstantes Potential eingestellt werden kann. Ist die Bezugselektrode 5 eine reine, vom Stromfluß unabhängige Sauerstoffelektrode, muss das elektrische Potential groß genug sein, um das CO zu oxidieren. Vorzugsweise wird ein Wert oberhalb von 1200 mV eingestellt. Gleichzeitig kann sichergestellt sein, dass die Oxidationsspannung für CO nicht in den Bereich der Wasserzersetzung gelangt. Dazu wird das Potential an der Sauerstoff-Bezugselektrode 5 auf einen oberen Grenzwert von höchstens 1700 mV begrenzt.

Weiterhin können auch Mittel zur Spannungsmessung und/oder Strommessung zwischen Arbeitselektrode 3 und Gegenelektrode 4 vorgesehen sein. Ohne oder mit nur geringem Stromfluß zeigt die elektrische Spannung zwischen Arbeitselektrode 3 und Gegenelektrode 4 den Belegungsgrad der Arbeitselektrode 3 mit CO an, da die sich einstellende Spannung der Wasserstoffoxidation unter CO-Einfluß schnell zusammenbricht. Bei den angegebenen Reformatströmen von etwa 100 Nm³/h sollte dies nach ca. 1 Sekunde erfolgen. Die Dauer des Stromstosses zur CO-Oxidation sollte daher deutlich kleiner sein als die Belegungszeit, also hier deutlich unterhalb einer Sekunde liegen, um die gereinigte Oberfläche der Arbeitselektrode 3 möglichst schnell wieder zur Verfügung zu haben. Damit kann eine intermittierende Versorgung mit gereinigtem Reformatstrom erfolgen. Das gereinigte Reformat kann zwischengespeichert werden oder einem Verbraucher, etwa einer Brennstoffzelleneinheit direkt zugeführt werden.

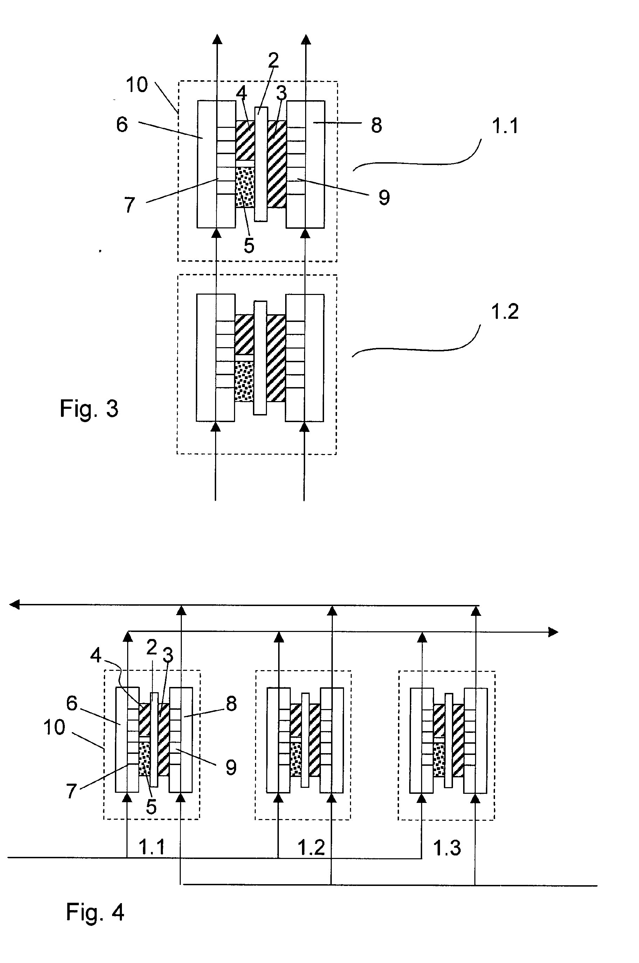

In Fig. 3 ist eine bevorzugte Weiterbildung der Erfindung dargestellt. Hier sind mehrere Zellen 1.1, 1.2 in Strömungsrichtung des zu reinigenden Gases hintereinandergeschaltet. Der Übersichtlichkeit wegen sind nur Komponenten einer Zelle 1.1 mit Bezugszeichen versehen. Die Zellen 1.1 und 1.2 sind vorzugsweise identisch aufgebaut.

Die Serienanordnung der Zellen 1.1, 1.2 erlaubt einen kontinuierlichen Betrieb der Gasreinigungseinheit. Zu Beginn sind beide Zellen 1.1, 1.2 mit CO unbeladen. Das zu reinigende Gas strömt zunächst durch die erste Zelle 1.1, gibt dort das CO an die Arbeitselektrode 3 ab und strömt dann praktisch CO-frei durch die zweite Zelle 1.2. Wenn die erste Zelle 1.1 mit CO beladen ist, erkennbar etwa an der Spannung zwischen Arbeitselektrode 3 und Gegenelektrode 4, geht die erste Zelle 1.1 in den Elektroden-Reinigungsbetrieb über, und die zweite Zelle 1.2 übernimmt die CO-Entfernung aus dem Reformat. Im Elektroden-Reinigungsbetrieb wird eine vorgegebene Konstantspannung an die Bezugselektrode 5 der ersten Zelle 1.1 gelegt, in der dann mit einem kurzen Stromstoß das CO an der Arbeitselektrode 3 oxidiert wird. Dann geht die zweite Zelle 1.2 in den Elektroden-Reinigungsbetrieb über und die erste Zelle 1.1 wird wieder mit CO beladen. Diese Anordnung erlaubt eine Reinigungszeit für eine beladene Zelle in der Größenordnung der Beladungszeit, also in etwa im Sekundentakt.

In einem günstigem Betriebsverfahren wird abhängig von einer elektrischen Spannung zwischen Arbeitselektrode 3 und Gegenelektrode 4und/oder Bezugselektrode 5 ein Stromfluß zwischen Arbeitselektrode 3 und Gegenelektrode 4 ausgelöst, indem die Bezugselektrode 5 mit einer vorgegebenen elektrischen Spannung U_{Ref} beaufschlagt wird. Vorzugsweise wird bei einer Sauerstoffbezugselektrode die Spannung U_{Ref} so gewählt, dass sie zwischen 1200 und 1700 mV liegt. Als Auslösekriterium kann das Zusammenbrechen der Wasserstoffoxidations-Spannung bei zunehmender CO-Belegung der Arbeitselektrode 3 gewählt werden.

Für den Fall einer höheren CO-Konzentration oder geringerer erzielbarer Stromdichten bei der CO-Oxidation ist eine Parallelschaltung der Zellen in Strömungsrichtung des zu reinigenden Gases möglich, wie in Fig. 4 anhand einer Parallelschaltung von 3 Zellen 1.1, 1.2, 1.3 dargestellt ist. Auch hier ist der Übersichtlichkeit wegen nur eine Zelle 1.1 mit Bezugszeichen versehen. Es ist auch möglich, eine Parallelschaltung von Zellen 1.1, 1.2, 1.3 in Serie mit einer Parallelschaltung von weiteren Zellen zu versehen, um einen kontinuierlichen Betrieb gemäß dem Beispiel der Fig. 3 auch bei geringen elektrischen Stromdichten bei der CO-Oxidation und/oder hohen CO-Konzentrationen zu ermöglichen. Die Zahl der Zellen 1, 1.1, 1.2, 1.3 wird vorzugsweise an die tolerierbare Stromdichte der Zellen angepaßt.

Die Erfindung ermöglicht eine Gasreinigung, die sofortige Betriebsbereitschaft ohne Aufheizen ermöglicht. Dies ist besonders bei Brennstoffzellensystemen günstig, die in Fahrzeugen verwendet werden. Die Gasreinigungseinheit ist ein kompakter Reaktor ähnlich einer Brennstoffzelle und kann auch in einen Brennstoffzellenstack, vorzugsweise einen PEM-Brennstoffzellenstack integriert werden.

Der Betriebsaufwand für die Vorrichtung ist gering. Zur Gasreinigung ist keine spezielle Luftdosierung notwendig, wie etwa in einem üblichen Gasreinigungssystem in einem Brennstoffzellensystem, bei dem CO durch selektive Oxidation entfernt wird, so dass vor allem ein Verdünnen des Reformatstroms durch zusätzlich zugeführten Luftstickstoff unterbleibt.

Beim ausschließlichen Einsatz von Shiftstufen zur Grobreinigung von wasserstoffreichem Reformat vor der Zuführung zur erfindungsgemäßen Vorrichtung wird in den Wasserstoff keinerlei Stickstoff eingetragen, und die Luftdosierung kann ganz entfallen. Es werden hier im wesentlichen reine H₂/CO₂-Gemische gebildet. Die Vorrichtung weist eine hohe Lebensdauer bei geringer oder praktisch gar keiner Wartung auf.

## Patentansprüche

1. Verfahren zur Entfernung von Kohlenmonoxid aus einem Gasstrom,
**dadurch gekennzeichnet,**
**dass** ein mit CO beaufschlagter Gasstrom durch eine Vorrichtung geleitet und CO durch Adsorption an der Arbeitselektrode (3) aus dem Gasstrom entfernt wird, wobei abhängig von einer elektrischen Spannung zwischen Arbeitselektrode (3) und Gegenelektrode (4) oder zwischen Arbeitselektrode (3) und Bezugselektrode (5) ein Elektroden-Reinigungsbetrieb eingeschaltet wird, indem ein Stromfluss zwischen Arbeitselektrode (3) und Gegenelektrode (4) ausgelöst und an der Arbeitselektrode (3) angelagertes CO zu CO₂ oxidiert wird.

2. Verfahren nach Anspruch 1,
**dadurch gekennzeichnet,**
**dass** an die Bezugselektrode (5) ein konstantes elektrisches Potential angelegt wird.

3. Verfahren nach Anspruch 1,
**dadurch gekennzeichnet,**
**dass** an die Bezugselektrode (5) ein elektrisches Potential zwischen 1200 mV und 1700 mV angelegt wird.

4. Verfahren nach Anspruch 1,
**dadurch gekennzeichnet,**
**dass** der zu reinigende Gasstrom durch eine erste Zelle (1.1) strömt, die Zelle (1.1) mit CO belädt und anschließend durch eine zweite Zelle (1.2) strömt, daß die beladene Zelle (1.1) in den Elektroden-Reinigungsbetrieb geschaltet wird und der zu reinigende Gasstrom während des Elektroden-Reinigungsbetriebs die zweite Zelle (1.2) mit CO belädt.

5. Verfahren nach Anspruch 1,
**dadurch gekennzeichnet,**
**dass** der Elektroden-Reinigungsbetrieb und die Beladung mit CO zyklisch zwischen den beiden Zellen (1.1, 1.2) abwechselt.

6. Vorrichtung zur Durchführung des Verfahrens gemäß Anspruch 1, umfassend eine Membran (2) mit einer auf einer Seite der Membran (2) angeordneten Arbeitselektrode (3) und einer durch die Membran (2) von dieser beabstandeten Gegenelektrode (4), wobei die Arbeitselektrode (3) ein kohlenmonoxidadsorbierendes Material enthält,
**dadurch gekennzeichnet,**
**dass** die Gegenelektrode (4) einen vom Stromfluss abgetrennten Bereich als Bezugselektrode (5) aufweist.

7. Vorrichtung nach Anspruch 6,
**dadurch gekennzeichnet,**
**dass** die Anordnung von Membran (2) und Elektroden (3, 4, 5) eine Zelle (1, 1.1, 1.2, 1.3) bilden.

8. Vorrichtung nach Anspruch 7,
**dadurch gekennzeichnet,**
**dass** die Zelle (1, 1.1, 1.2, 1.3) nach Art einer Brennstoffzelle mit Membran-Elektrodeneinheit (2, 3, 4, 5) und Kontaktplatten (6, 8) ausgebildet ist.

9. Vorrichtung nach Anspruch 7,
**dadurch gekennzeichnet,**
**dass** die Kontaktplatten (6, 8) zur Gaszufuhr und/oder Stromzuführung zu den Elektroden (3, 4) vorgesehen sind.

10. Vorrichtung nach Anspruch 6,
**dadurch gekennzeichnet,**
**dass** mehrere Zellen (1.1, 1.2) in Strömungsrichtung des zu reinigenden Gases hintereinandergeschaltet sind.

11. Vorrichtung nach Anspruch 6,
**dadurch gekennzeichnet,**
**dass** mehrere Zellen (1.1, 1.2, 1.3) in Strömungsrichtung des zu reinigenden Gases parallelgeschaltet sind.

12. Vorrichtung nach Anspruch 6,
**dadurch gekennzeichnet,**
**dass** die Arbeitselektrode (3) in den zu reinigenden Gasstrom integriert ist.

13. Vorrichtung nach Anspruch 6,
**dadurch gekennzeichnet,**
**dass** die Gegenelektrode (4, 5) in einem Luftstrom angeordnet ist.

14. Vorrichtung nach Anspruch 6,
**dadurch gekennzeichnet,**
**dass** das kohlenmonoxidadsorbierende Material ein Edelmetall ist.

15. Vorrichtung nach Anspruch 6,
**dadurch gekennzeichnet,**
**dass** Mittel zur Spannungsmessung (11) an der Bezugselektrode (5) und/oder zur Strommessung zwischen Arbeitselektrode (3) und Gegenelektrode (4) vorgesehen sind.
